(19) Europäisches Patentamt
European Patent Office
Office européen des brevets

(11) Veröffentlichungsnummer: **0 235 728 B1**

(12) **EUROPÄISCHE PATENTSCHRIFT**

(45) Veröffentlichungstag der Patentschrift: **30.09.92**

(51) Int. Cl.$^5$: **C08G 77/42**, C08G 77/442

(21) Anmeldenummer: **87102583.9**

(22) Anmeldetag: **24.02.87**

Die Akte enthält technische Angaben, die nach dem Eingang der Anmeldung eingereicht wurden und die nicht in dieser Patentschrift enthalten sind.

# (54) Blockcopolymerisate mit Polysiloxan-Segmenten.

(30) Priorität: **04.03.86 DE 3606983**
**04.03.86 DE 3606984**

(43) Veröffentlichungstag der Anmeldung:
**09.09.87 Patentblatt 87/37**

(45) Bekanntmachung des Hinweises auf die Patenterteilung:
**30.09.92 Patentblatt 92/40**

(84) Benannte Vertragsstaaten:
**DE FR GB IT**

(56) Entgegenhaltungen:
**EP-A- 0 135 794**
**EP-A- 0 210 401**

**JOURNAL OF APPLIED POLYMER SCIENCE, Band 17, 1973, Seiten 619-628, John Wiley & Sons, Inc.; A. NOSHAY et al.: "Poly(alpha-methylstyrene)-0poly(dimethylsiloxane) block copolymers"**

**W.Noll: Chemie und Technologie der Silicone, 2. Auflage, 1968, Verlag Chemie, Weinheim, Seiten 621-624.**

(73) Patentinhaber: **BAYER AG**

**W-5090 Leverkusen 1 Bayerwerk(DE)**

(72) Erfinder: **Eichenauer, Herbert, Dr.**
**Goethestrasse 71**
**W-4047 Dormagen(DE)**
Erfinder: **Lindner, Christian, Dr.**
**Riehlerstrasse 200**
**W-5000 Köln 60(DE)**
Erfinder: **Ott, Karl-Heinz, Dr.**
**Paul-Klee-Strasse 54**
**W-5090 Leverkusen(DE)**

**EP 0 235 728 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Blockcopolymere aus wiederkehrenden Struktureinheiten aus der Reihe der Polysiloxane und wiederkehrenden Struktureinheiten aus Co- oder Terpolymerisaten aus Styrol, (Meth)-acrylnitril und Methylmethacrylat.

Verschiedenartige Blockcopolymere sind bekannt, z. B. Styrol-Butadien-Blockcopolymere, Blockcopolymere aus aliphatischen Polyestern oder Polyethern und Polyestern von aromatischen Dicarbonsäuren oder Blockcopolymere auf der Basis aromatischer Polycarbonate. In Journal of Applied Polymer Science Bl 17 (1973) S 619-628 sind Blockcopolymere von α-Methylstyrol und Polydimethylsiloxanen beschrieben.

Neu sind dagegen Blockcopolymerisate, bei denen die Polymerblöcke aus Polysiloxaneinheiten und den oben angegebenen Einheiten aufgebaut sind.

Es wurde gefunden, daß blockartig aufgebaute Polymere auf Basis von Polysiloxanen und den oben angegebenen Segmenten, interessante Eigenschaften besitzen, z. B. gute Flexibilität, insbesondere bei tiefen Temperaturen.

Gegenstand der Erfindung sind Polymerisate mit blockartiger Struktur bestehert aus Struktureinheiten (I)

$$-\!\left[\, A \,\right]\!- \qquad (I)$$

und Struktureinheiten (II) und/oder (III)

$$\left[\, B \,\right]\!- \qquad (II)$$

$$-\!\left[\, B \,\right]\!- \qquad (III)$$

wobei die Polymerisate mittlere Molekulargewichte ($M_w$) von 2.000 bis 500.000, vorzugsweise 5.000 bis 250.000 aufweisen, dadurch gekennzeichnet, daß

- A ein bifunktionelles Polysiloxansegment der Formel (IV) oder (IVa)

$$-\!\left[(R^1)(R^2)SiO\right]_x\!- \qquad (IV)$$

$$-\!\left[\underset{\displaystyle H}{\overset{}{N}}-Y-O-\left[(R^1)(R^2)SiO\right]_x-Y-\underset{\displaystyle H}{N}\right]\!- \qquad (IVa)$$

  darstellt worin $R^1$, $R^2$ unabhängig voneinander = Aryl, Alkyl und Y eine lineare oder verzweigte $C_2$-$C_{10}$-Alkylengruppe sind, und x eine solche Zahl darstellt, daß das Segment (IV) oder (IVa) Molekulargewichte ($M_w$) von >500, vorzugsweise >750 besitzt, und
- B bzw. -B- mono- oder bifunktionelle Reste eines Co- oder Terpolymerizats aus Styrol, (Meth)-acrylnitril und Methylmethacrylat darstellt, wobei diese Segmente Molekulargewichte ($\overline{M}_w$) > 800 aufweisen

Bevorzugt sind Co- oder Terpolymerisate aus Styrol, Acrylnitril, Methylmethacrylat oder Mischungen daraus, die in Gegenwart von Mercaptoethanol bzw. Mercaptoessigsäure oder Mercaptopropionsäure polymerisiert wurden.

Ein weiterer Gegenstand der Erfindung ist ein Verfahren zur Herstellung der erfindungsgemäßen

Blockcopolymeren, das dadurch gekennzeichnet ist, daß man ein Co- und/oder Terpolymerisat aus Styrol, (Meth)acrylnitril und Methylmethacrylat mit einer oder zwei terminalen Hydroxylgruppen der Formel (V) oder (VI)

B - OH (V)
HO - B - OH (VI)

bzw. mit einer oder zwei terminalen Carboxylgruppen der Formel (VII) oder (VIII)

B - COOH (VII)
HOOC - B - COOH (VIII)

worin B für die oben definierten Polymersegmente steht und ein Polysiloxan der Formel (IX) oder (IXa)

$$R^3COO-\left[-(R^1)(R^2)SiO-\right]_x-COR^3 \qquad (IX)$$

$$H_2N-Y-O-\left[-(R^1)(R^2)SiO-\right]_x-Y-NH_2 \qquad (IXa)$$

mit $R^1$, $R^2$ = unabhängig voneinander Aryl (insbesondere Phenyl) oder Alkyl (insbesondere Methyl), Y = lineare oder verzweigte $C_2$-$C_{10}$-Alkylengruppe; $R^3$ = $C_1$-$C_{18}$-Alkyl x = ganze Zahl, gegebenenfalls unter Katalyse oder mittels wasserbindender Mittel, bzw. säurebindender Mittel, unter Abspaltung von Wasser, bzw. der Säure $R^3COOH$ polykondensiert, wobei die Verbindungen (V) bzw. (VI) bzw. (VII) bzw. (VIII) ein durchschnittliches Molekulargewicht ($M_w$) von 800 bis 20.000, vorzugsweise von 1.500 bis 15.000, und das Polysiloxan (IX) bzw. (IXa) ein durchschnittliches Molekulargewicht ($M_w$) von 500 bis 20.000 aufweisen.

Die in den Blockcopolymeren enthaltenen Polysiloxane sind Polydialkyl-, Polydiaryl- oder Polyarylalkylsiloxane, insbesondere Polydimethylsiloxan- oder Polymethylphenylsiloxan-Reste. Sie besitzen Blockmolekulargewichte von 500 bis 20.000, insbesondere 800 bis 15.000, sie sind weitgehend linear. Die Herstellung der Polysiloxane (IX) und (IXa) ist bekannt, sie kann z.B. durch Ringöffnung cyclischer Siloxane mit Säureanhydriden in Gegenwart von Katalysatoren ($FeC1_3$, $ZnC1_2$, Bortriacetat, und gegebenenfalls anschließende Umsetzung mit Hydroxyaminen erfolgen (vgl. S.N. Borisov und N.G. Sviridova in Journal of Organometallic Chemistry 11 (1968), 27-33 oder Britische Patentschrift 899939).

Die die Blöcke B bildenden Polymersegmente leiten sich von Co- und/oder Terpolymeren aus Styrol, (Meth)acrylnitril und Methylmethacrylat oder Mischungen daraus ab.

Ihre Herstellung erfolgt durch radikalische Polymerisation dieser Monomeren in Gegenwart zur Einstellung des gewünschten Molekulargewichts geeigneter Mengen hydroxylgruppenhaltiger bzw. carboxylgruppenhaltiger Mercaptane.

Beispiele für solche Verbindungen sind Mercaptoethanol ($HO-CH_2CH_2-SH$), Mercaptopropanol, Mercaptobutanol, Mercaptophenol, Mercaptoessigsäure, Mercaptopropionsäure, Mercaptobuttersäure.

Die Herstellung der zu den Blöcken B führenden Polymersegmente kann nach den bekannten Verfahren der radikalischen Polymerisation z. B. in Substanz, in Lösung, in Emulsion oder in Suspension oder durch Kombination dieser Verfahren erfolgen; geeignete radikalbildende Initiatoren sind organische und anorganische Peroxide, wie z. B. Benzoylperoxid, Cumolhydroperoxid oder anorganische Peroxide, z.B. Kaliumperoxid oder Wasserstoffperoxid, anorganische Persulfate wie z. B. Kaliumpersulfat, Azoinitiatoren wie z.B. Azobisisobutyronitril sowie Redox-Systeme, die aus einem Oxidationsmittel, vorzugsweise einem Peroxid, und einem Reduktionsmittel bestehen. Dabei können auch solche geeigneten Initiatoren eingesetzt werden, über die eine terminale Hydroxylgruppe bzw. eine terminale Carboxylgruppe in die Polymerkette eingeführt werden kann.

Die Polymerisationsreaktion kann in einem weiten Temperaturbereich durchgeführt werden, vorzugsweise erfolgt sie zwischen 30° und 100°C, besonders bevorzugt zwischen 50° und 80°C.

Die erfindungsgemäßen Blockcopolymeren können hergestellt werden, indem man bisacylierte Polysiloxane der Formel (IX) oder Polysiloxane mit terminalen Aminogruppen der Formel (IXa) mit Homo- und/oder Co- und/oder Terpolymeren aus Vinylaromaten oder Acrylverbindungen oder Mischungen daraus mit einer oder zwei terminalen Hydroxylgruppen der Formel (V) bzw. (VI) bzw. mit einer oder zwei terminalen

Carboxylgruppen der Formel (VII) bzw. (VIII) polykondensiert. Normalerweise werden die Ausgangskomponenten der Formeln (V) bzw. (VI) und (IX) oder (VII) bzw. (VIII) und (IXa) in äquimolaren Mengen eingesetzt, es kann aber auch vorteilhaft sein, die eine oder andere Komponente in geringem Überschuß einzusetzen. Man kann dann das Endmolekulargewicht besser steuern und die Art der Endgruppen bestimmen. Um das Molekulargewicht schon bei der Synthese zu bestimmen, kann man Molekulargewichtsregler verwenden, z. B. monofunktionelle Verbindungen wie Monoalkohole, monoacylierte Polysiloxane, Anhydride, Ester und Säurechloride.

Die Synthese der Blockcopolymerisate kann bei Temperaturen von 40° bis etwa 200°C durchgeführt werden, insbesondere bei 80° bis 150°C. Dabei kann ohne oder mit Lösungsmittel gearbeitet werden, z. B. mit aromatischen Kohlenwasserstoffen, Paraffinen, chlorierten Kohlenwasserstoffen, flüssigen Amiden, Estern, Ketonen oder Ethern.

Eine bevorzugte Ausführungsform des Verfahrens startet ohne Lösungsmittel und fügt Lösungsmittel am Ende der Polykondensation zu.

Bei Verwendung von Polysiloxanen der Formel (IX) benutzt man bevorzugt Katalysatoren und/oder säurebindende Mittel, z.B. organische oder anorganische Basen wie Salze (Carbonate von Alkali- oder Erdalkalemetallen) oder lösliche organische Basen, wie tertiäre Amine, auch Phasentransferkatalysatoren, Phosphine, Lewis-Basen sind geeignet. Unter Umständen ist bei bestimmten Reaktionstemperaturen auch das Arbeiten in Gegenwart katalytischer Mengen starker Säuren vorteilhaft, insbesondere dann, wenn man die Polykondensation unter Abdestillation der gebildeten Säuren durchführt.

Vorzugsweise wird die Polykondensationsreaktion mit Polysiloxanen der Formel (IXa) unter Verwendung von Katalysatoren und/oder wasserbindenden Mitteln durchgeführt. Unter Umständen ist bei bestimmten Reaktionstemperaturen auch das Arbeiten in Gegenwart katalytischer Mengen starker Säuren vorteilhaft.

Die Synthese läßt sich diskontinuierlich oder kontinuierlich durchführen, auch in Knetaggregaten oder Schneckenaggregaten.

Vorteilhaft ist es ebenfalls, die gesamte Menge der Ausgangssubstanz (V) bzw. (VI) oder (IX) bzw. (VII) bzw. (VIII) oder (IXa) vorzulegen und - je nach Fortschritt der Reaktion - die restliche Menge der unterschiedlichen Ausgangskomponenten (IX) bzw. (V) bzw. (VI) oder (IXa) bzw. (VII) bzw. (VIII) zuzudosieren.

Im Anschluß an die Synthese lassen sich die Blockcopolymerisate, gegebenenfalls unter Verdampfen der Hilfslösemittel oder Abfiltration der wasserentziehenden Mittel, isolieren, und durch übliche Antioxidantien oder Lichtschutzmittel stabilisieren.

Die erfindungsgemäßen Blockcopolymerisate besitzen gute mechanische Eigenschaften, insbesondere bei tiefen Temperaturen, gute Chemikalien- und Lösungsmittelresistenz und sind, gegebenenfalls in Mischung mit anderen Polymeren, zur thermoplastischen Verarbeitung geeignet.

## Beispiele

### Beispiel 1

70,56 Gew.-Teile Styrol, 27,44 Gew.-Teile Acrylnitril, 2 Gew.-Teile Mercaptoessigsäure und 3 Gew.-Teile tert.-Butylperpivalat werden in 500 ml Ethylbenzol gelöst und 7 Stunden lang auf 70°C erhitzt. Nach Entfernung des Lösungsmittels und Trocknen wird ein Polymer (Ausbeute 82 %) mit einem Schwefelgehalt von 0,80 Gew.-% und einer Grenzviskosität von 13,5 ml/g (in Dimethylformamid bei 25°C) erhalten.

### Beispiel 2

63,05 Gew.-Teile Styrol, 14,55 Gew.-Teile Acrylnitril, 19,40 Gew.-Teile Methylmethacrylat, 3 Gew.-Teile 3-Mercaptopropionsäure und 3 Gew.-Teile tert.-Butylperpivalat werden in 450 ml Ethylbenzol gelöst und 7 Stunden lang auf 70°C erhitzt. Nach Entfernung des Lösungsmittels und Trocknen wird ein Polymer (Ausbeute 85 %) mit einem Schwefelgehalt von 0,85 Gew.-% und einer Grenzviskosität von 7,8 ml/g (in Dimethylformamid bei 25°C) erhalten.

### Beispiel 3

920 Gew.-Teile des Polymerisats aus Beispiel 1, 350 Gew.-Teile eines Polydimethylsiloxans mit terminalen $-CH(CH_3)-CH_2-NH_2-$ Gruppierungen und einem Molekulargewicht von 3500 (bestimmt durch Aminoendgruppenbestimmung) und 1000 Gew.-Teile Toluol werden gemischt und 1 Stunde lang auf 110° - 120°C erhitzt. Danach wird das Lösungsmittel abdestilliert und das Reaktionsgemisch weitere 6 Stunden im

Vakuum auf 150 °C erhitzt. Das resultierende Produkt besitzt eine Grenzviskosität von 21,5 ml/g (in Chlorbenzol bei 25 °C).

Beispiel 4

Beispiel 3 wird wiederholt, wobei unter Beibehaltung der Mengen an Polydimethylsiloxan und Toluol 840 Gew.-Teile des Polymerisats aus Beispiel 2 eingesetzt werden. Es resultiert ein Produkt mit einer Grenzviskosität von 18 ml/g (in Chlorbenzol bei 25 °C).

Beispiel 5

70,56 Gew.-Teile Styrol, 27,44 Gew.-Teile Acrylnitril, 2 Gew.-Teile Mercaptoethanol und 3 Gew.-Teile tert.-Butylperpivalat werden in 280 ml Ethylbenzol gelöst und 7 Stunden lang auf 70 °C erhitzt. Nach Entfernung des Lösungsmittels und Trocknen wird ein Polymer (Ausbeute 88%) mit einem Schwefelgehalt von 0,90 Gew.-%, und einer Grenzviskosität von 12 ml/g (in Dimethylformamid bei 25 °C) erhalten.

Beispiel 6

49 Gew.-Teile Styrol, 49 Gew.-Teile Methylmethacrylat, 2 Gew.-Teile Mercaptoethanol und 3 Gew.-Teile tert.-Butylperpivalat werden in 300 ml Ethylbenzol gelöst und 7 Stunden lang auf 70 °C erhitzt. Nach Entfernung des Lösungsmittels und Trocknen wird ein Polymer (Ausbeute 86%) mit einem Schwefelgehalt von 0,85 Gew.-% und einer Grenzviskosität von 8,5 ml/g (in Dimethylformamid bei 25 °C) erhalten.

Beispiel 7

760 Gew.-Teile des Polymerisats aus Beispiel 5, 400 Gew.-Teile eines $\alpha,\omega$-bis-acetylierten Polydimethylsiloxans mit einem Molekulargewicht von 4.000 (bestimmt durch Acetylbestimmung), 50 Gew.-Teile $Na_2CO_3$ und 3.000 Gew.-Teile Toluol werden 5 Stunden bei 110° - 120 °C umgesetzt. Danach wird abgekühlt, filtriert und das Lösungsmittel abdestilliert. Das resultierende Produkt besitzt eine Grenzviskosität von 21 ml/g (in Chlorbenzol bei 25 °C).

Beispiel 8

Beispiel 7 wird wiederholt, wobei unter Beibehaltung der Mengen an $\alpha,\omega$-bis-acetyliertem Polydimethylsiloxan, $Na_2CO_3$ und Toluol 800 Gew.-Teile des Polymerisats aus Beispiel 6 eingesetzt werden. Das resultierende Produkt besitzt eine Grenzviskosität von 17,5 ml/g (in Chlorbenzol bei 25 °C).

**Patentansprüche**

**1.** Polymerisate mit blockartiger Struktur bestehend aus Struktureinheiten (I)

$$-\left[ A \right]- \qquad (I)$$

und Struktureinheiten (II) und/oder (III)

$$\left[ B \right]- \qquad (II)$$

$$-\left[ B \right]- \qquad (III)$$

wobei die Polymerisate mittlere Molekulargewichte ($M_w$) von 2.000 bis 500.000 aufweisen, dadurch

gekennzeichnet, daß

- A ein bifunktionelles Polysiloxansegment der Formel (IV) bzw. (IVa)

$$-\!\!\left[ R^1R^2SiO \right]_X\!\!- \qquad (IV)$$

$$-\!\!\left[ \underset{\displaystyle H}{\underset{|}{N}}-Y-O-\!\!\left[(R^1)(R^2)SiO\right]_x\!\!-Y-\underset{\displaystyle H}{\underset{|}{N}} \right]\!\!- \qquad (IVa)$$

  darstellt worin $R^1$, $R^2$ = unabhängig voneinander Aryl und/oder Alkyl und Y eine lineare oder verzweigte $C_2$-$C_{10}$-Alkylengruppe ist, und x eine solche Zahl darstellt, daß (IV) bzw. (IVa) Molekulargewichte ($M_w$) von >500 besitzt, und
- B bzw. -B- mono- oder bifunktionelle Reste eines, Co- oder Terpolymerisats aus Styrol, (Meth)-Acrylnitril und Methylmethacrylat darstellt, wobei diese Segmente Molekulargewichte ($\overline{M}_w$) > 800 aufweisen.

**2.** Verfahren zur Herstellung von Polymeren nach Anspruch 1, dadurch gekennzeichnet, daß man Co- und/oder Terpolymerisate aus Styrol, (Meth)Acrylnitril und Methylmethacrylat mit terminalen Hydroxylgruppen (V) bzw. (VI) bzw. mit terminalen Carboxylgruppen (VII) bzw. (VIII)

B-OH (V)
HO-B-OH (VI)
B-COOH (VII)
HOOC-B-COOH (VIII)

sowie ein Polysiloxan der Formel (IX) oder (IXa)

$$R_3COO-\!\!\left[R^1R^2SiO\right]_x\!\!-COR^3 \qquad (IX)$$

$$H_2N-Y-O-\!\!\left[(R^1)(R^2)SiO\right]_x\!\!-Y-NH_2 \qquad (IXa)$$

unter Abspaltung von Wasser bzw. der Säure $R^3COOH$ polykondensiert, wobei $R^1$, $R^2$ = unabhängig voneinander Alkyl oder Aryl Y = lineare oder verzweigte $C_{2-10}$-Alkylengruppe $R^3$ = $C_1$-$C_{18}$ Alkyl und x eine ganze Zahl bedeuten und wobei die Verbindungen (V) bzw. (VI) bzw. (VII) bzw. (VIII) durchschnittliche Molekulargewichte ($M_w$) von 800 bis 20 000 und die Verbindung (IX) bzw. (IXa) durchschnittliche Molekulargewichte ($M_w$) von 500 bis 20 000 aufweisen.

**3.** Verwendung der Polymeren nach Ansprüchen 1 und 2 zur Herstellung von Mischungen mit anderen Polymeren.

## Claims

**1.** Block-like polymers consisting of structural units (I)

$$-\!\!\left[\; A \;\right]\!\!- \qquad (I)$$

and structural units (II) and/or (III)

$$\left[\; B \;\right]\!\!-\qquad (II)$$

$$-\!\!\left[\; B \;\right]\!\!-\qquad (III)$$

the polymers having average molecular weights ($M_w$) of 2,000 to 500,000, characterized in that

- A is a bifunctional polysiloxane segment corresponding to formula (IV) or (IVa)

$$-\!\!\left[\; R^1R^2SiO \;\right]_x\!\!-\qquad (IV)$$

$$-\!\!\left[\; \underset{H}{N}-Y-O-\!\!\left[\; (R^1)(R^2)SiO \;\right]_x\!\!-\; Y-\underset{H}{N} \;\right]\!\!-\qquad (IVa)$$

in which $R^1$ and $R^2$ independently of one another represent aryl and/or alkyl and Y is a linear or branched $C_{2-10}$ alkylene group and x is such a number that (IV) and (IVa) have molecular weights ($M_w$) of > 500 and B and -B- are monofunctional or bifunctional residues of a copolymer or terpolymer of styrene, (meth)acrylonitrile and methyl methacrylate, these segments having molecular weights ($M_w$) of > 800.

**2.** A process for the production of the polymers claimed in claim 1, characterized in that copolymers and/or terpolymers of styrene, (meth)acrylonitrile and methyl methacrylate terminated by hydroxyl groups (V) or (VI) or by carboxyl groups (VII) or (VIII)

B-OH (V)
HO-B-OH (VI)
B-COOH (VII)
HOOC-B-COOH (VIII)

and a polysiloxane corresponding to formula (IX) or (IXa)

$$R_3COO-\!\!\left[\; R^1R^2SiO \;\right]_x\!\!-\; COR^3\qquad (IX)$$

$$H_2N-Y-O-\!\!\left[\; (R^1)(R^2)SiO \;\right]_x\!\!-\; Y-NH_2\qquad (IXa)$$

in which R and $R^2$ independently of one another = alkyl or aryl, Y = linear or branched $C_{2-10}$ alkylene group, $R^3$ = $C_{1-18}$ alkyl and x is an integer,
are polycondensed with elimination of water or the acid $R^3COOH$, the compounds (V), (VI), (VII) and (VIII) having average molecular weights ($M_w$) of 800 to 20,000 and the compounds (IX) and (IXa) having average molecular weights ($M_w$) of 500 to 20,000.

**3.** The use of the polymers claimed in claims 1 and 2 for the production of mixtures with other polymers.

**Revendications**

**1.** Polymères à structure séquencée, consistant en motifs de structure I

$$-[\ A\ ]- \qquad (I)$$

et motifs de structure II et/ou III

$$[\ B\ ]- \qquad (II)$$

$$-[\ B\ ]- \qquad . \quad (III)$$

les polymères ayant des poids moléculaires moyens $M_w$ de 2 000 à 5 000, caractérisés en ce que

- A représente un segment bifonctionnel de polysiloxane de formule IV ou IVa

$$--[-R^1R^2SiO-]_x- \qquad (IV)$$

$$-\left[\underset{\displaystyle H}{\overset{|}{N}}-Y-O-[(R^1)(R^2)SiO]_x-Y-\underset{\displaystyle H}{\overset{|}{N}}\right]- \qquad (IVa)$$

  dans lesquelles $R^1$ et $R^2$ représentent chacun, indépendamment l'un de l'autre, un radical aryle et/ou alkyle, Y représente un groupe alkylène linéaire ou ramifié en $C_2$-$C_{10}$, et x est un nombre tel que les segments IV et IVa aient des poids moléculaires $M_w$ supérieurs à 500, et
- B et -B- représentent respectivement des radicaux mono- ou bifonctionnels d'un copolymère binaire ou ternaire du styrène, du (méth)acrylonitrile et du méthacrylate de méthyle, ces segments ayant des poids moléculaires $\overline{M}_w$ supérieurs à 800.

**2.** Procédé de préparation des polymères selon la revendication 1, caractérisé en ce que l'on soumet à polycondensation des copolymères binaires et/ou ternaires du styrène, du (méth)acrylonitrile et du méthacrylate de méthyle à groupe terminaux hydroxy V ou VI ou groupes terminaux carboxyle VII ou VIII

B-OH (V)
HO-B-OH (VI)
B-COOH (VII)
HOOC-B-COOH (VIII)

et un polysiloxane de formule IX ou IXa

$$R^3COO-[-R^1R^2SiO-]_x-COR^3 \qquad (IX)$$

$$H_2N-Y-O-[(R^1)(R^2)SiO]_x-Y-NH_2 \qquad (IXa)$$

avec séparation d'eau ou de l'acide $R^3COOH$ respectivement, $R^1$ et $R^2$ représentent chacun, indépendamment l'un de t'autre, un groupe alkyle ou aryle, Y un groupe alkylène linéaire ou ramifié en $C_2$-$C_{10}$, $R^3$ un groupe alkyle en $C_1$-$C_{18}$ et x un nombre entier, les composés V, VI, VII et VIII ayant des poids

moléculaires moyens $M_w$ de 800 à 20 000 et tes composés IX et IXa des poids moléculaires moyens $M_w$ de 500 à 20 000.

**3.** Utilisation des polymères selon les revendications 1 et 2 pour ta préparation de mélanges avec d'autres polymères.